Europäisches Patentamt

European Patent Office

Office européen des brevets

(11) Veröffentlichungsnummer: **0 564 913 A1**

# (12) EUROPÄISCHE PATENTANMELDUNG

(21) Anmeldenummer: **93104886.2**

(22) Anmeldetag: **24.03.93**

(51) Int. Cl.5: **G05B 23/02**, G05B 19/405

(30) Priorität: **06.04.92 DE 4211546**

(43) Veröffentlichungstag der Anmeldung:
**13.10.93 Patentblatt 93/41**

(84) Benannte Vertragsstaaten:
**CH DE ES FR IT LI SE**

(71) Anmelder: **SIEMENS AKTIENGESELLSCHAFT**
**Wittelsbacherplatz 2**
**D-80312 München(DE)**

(72) Erfinder: **Ebermann, Joachim, Dipl.-Ing.**
**Dr. Sal.-Allende-Strasse 156**
**O-9044 Chemnitz(DE)**
Erfinder: **Schultze, Klaus**
**Fritz-Schmenkel-Strasse 46**
**O-9071 Chemnitz(DE)**
Erfinder: **Jungnickel, Günther, Dipl.-ing.**
**Röntgenstrasse 33**
**O-9044 Chemnitz(DE)**

(54) Verfahren und Einrichtung zur Analyse von Regelstrecken in numerischen Regelsystemen.

(57) In einem numerischen Regelsystem wird eine Regelstrecke für einen vorgebbaren Analysebetriebsfall von einem betriebsgemäßen Regler abgetrennt und mit vorgebbaren Testsignalen beaufschlagt. Unter Einbeziehung betriebsgemäßer Positionskontrolleinrichtungen können die Parameter der Regelstrecke ermittelt und angezeigt werden.

FIG 1

Die Erfindung bezieht sich auf ein Verfahren und eine Einrichtung zur Analyse von Regelstrecken in numerischen Regelsystemen. In der älteren deutschen Patentanmeldung P 42 04 859 werden zur Analyse und Optimierung eines numerischen Steuerungssystems von diesem Signale abgegriffen, normiert und an eine Ausgabeeinrichtung weitergeleitet, so daß die an der Ausgabeeinrichtung angezeigten normierten Signalverläufe vom Bediener einfach beurteilt werden können und dieser über ein Eingabegerät das Steuerungssystem, insbesondere eine Regelkreisanordnung, leicht optimieren kann.

Nachteilig bei diesem Verfahren ist, daß eine Optimierung der Regelstrecke, insbesondere wenn diese mindestens einen weiteren unterlagerten Regelkreis, z.B. einen Drehzahlregelkreis enthält, nicht ohne weiteres möglich ist, da Aussagen zu dessen Verhalten bezüglich der Sollwertvorgaben nicht losgelöst von der Reaktion des übergeordneten Reglers gewonnen werden können. Für solche Optimierungsprozesse sind daher ausschließlich steuerungsexterne Hilfsmittel erforderlich, deren Einsatz in der Regel mit einer elektrischen Abtrennung der Baugruppen der Regelstrecke von der den Regler beinhaltenden Steuerung verbunden ist. Bei diesem, nach herkömmlicher Technik üblichen Abtrennen der Baugruppen, werden aber auch alle in der Steuerung installierten Überwachungseinrichtungen der Regelgröße ausgeschaltet. Als Positionskontrolleinrichtungen können hier z.B. Softendlagen zur Verfahrweg- bzw. Arbeitsraumbegrenzung vorhanden sein.

Aufgabe der Erfindung ist es, die Nachteile der bestehenden Lösung zu beseitigen. Durch das Verfahren und die Einrichtung ist es möglich, unter Zuhilfenahme von steuerungseigenen Mitteln, die bereits für das Betreiben eines Regelsystems vorgesehen sind, die Kontrolle bzw. Inbetriebnahme einer Regelstrecke durch Analyse deren Parameter unter Einbeziehung betriebsgemäßer Positionskontrolleinrichtungen zu ermöglichen.

Die Aufgabe wird durch ein Verfahren zur Analyse von Regelstrecken in numerischen Regelsystemen gelöst, wobei die Regelstrecke für einen vorgebbaren Analysebetriebsfall von einem betriebsgemäßen Regler abgetrennt wird und mit vorgebbaren Testsignalen beaufschlagt wird, wobei die Istwerte eines Antriebssystems der von den Testssignalen ausgelösten Zustandsgrößen der Regelstrecke angezeigt werden und wobei der Analysebetrieb durch eine Ablaufsteuerung koordiniert wird.

Ausgestaltungen des Verfahrens sind Gegenstand der Unteransprüche.

Bei einer erfindungsgemäßen Einrichtung zur Durchführung des Verfahrens läßt sich eine betriebsmäßig von einem Regler gesteuerte Regelstrecke zum Zweck der Inbetriebnahme- und Optimierungshandlungen vom Regler abtrennen und getrennt betreiben, wobei die Regelgröße so weiter verarbeitet wird, daß eine ruckfreie Wiederaufnahme der Regelung mit folgender Wiederherstellung des vor der Abtrennung vorliegenden Zustands der Regelgröße vorgenommen wird und eine zeitliche Analyse der Regelgröße für die Zeit des ungeregelten Betriebs der Regelstrecke erfolgen kann.

Ausgestaltungen der Einrichtung sind Gegenstand der Unteransprüche.

Ein Ausführungsbeispiel der Erfindung wird im folgenden anhand einer Figur erläutert. Dabei zeigen:

FIG 1     ein Blockschaltbild einer Einrichtung zur Analyse eines Regelkreises,

FIG 2     Diagramme von Kommandosignalen,

FIG 3     ein Geschwindigkeits-Istwertdiagramm,

FIG 4     ein Geschwindigkeits-Sollwertdiagramm.

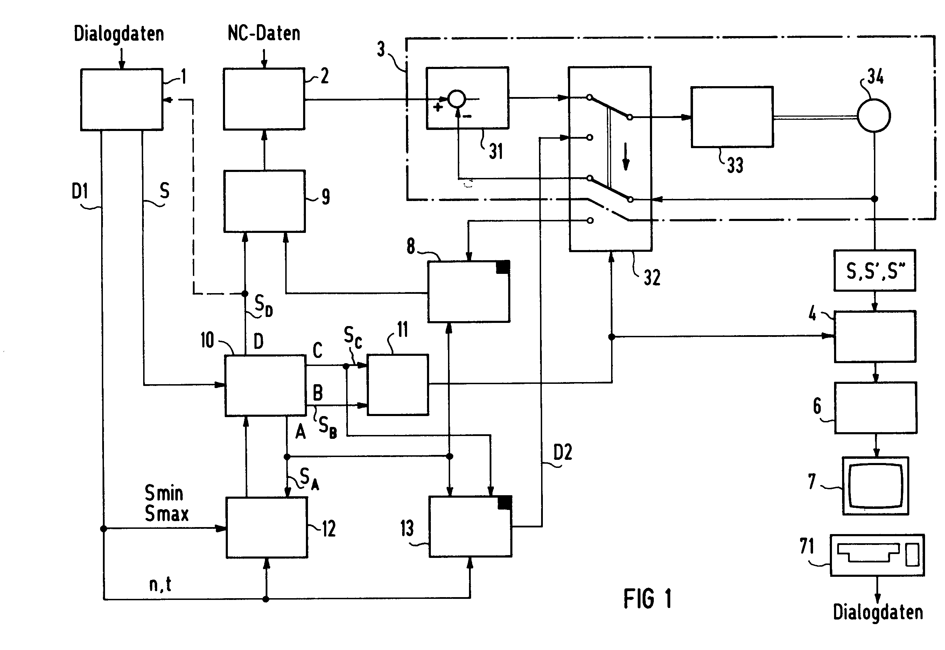

FIG 1 zeigt eine Einrichtung zur Analyse eines Drehzahlregelkreises 33 der einem Lageregelkreis 3 unterlagert ist. Zwischen dem Lageregler 31 und dem Drehzahlregelkreis 33 ist eine Umschaltvorrichtung 32 angeordnet, mittels der der Drehzahlregelkreis 33 vom Lageregler 31 abgetrennt und mit einer Analysevorrichtung verbunden werden kann.

Im normalen Betrieb der numerischen Steuerung werden NC-Daten der Sollwertsteuerung 2 zugeführt, die den nachgeschalteten Lageregelkreis 3 mit Bewegungssollwerten versorgt. Über die gezeigte Ausgangsstellung des Schalterblocks 32 wird dabei der Ausgang des Lagereglers 31 mit dem Eingang des einen Antriebsmotor enthaltenden Drehzahlregelkreises 33 verbunden. Der Antriebsmotor ist mechanisch mit einem Wegmeßgeber 34 gekoppelt, dessen Meßsignal an den Lageregler 31 zurückgeführt ist.

Zur Analyse des Drehzahlregelkreises 33 wird der Steuereinheit 1 durch Eingabe von Dialogdaten über die Eingabeeinheit 71 das Kommando erteilt, einen Analyse- bzw. Testbetrieb der Regelstrecke des Lagereglers 31 durchzuführen.

Parameter dieses Testbetriebs seien z.B. der Betrag eines Drehzahlsollwerts n und dessen Zeitdauer t.

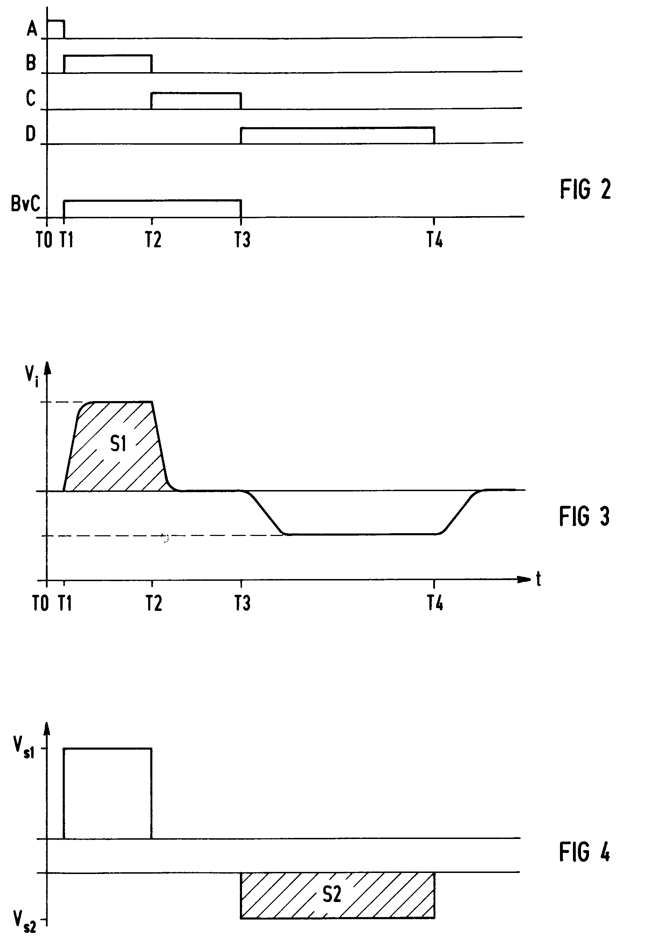

Die Steuereinheit 1 gibt die Parameter an die Kontrolleinrichtung 12 und den Sollwertspeicher 13, sowie ein Startsignal S an die Ablaufsteuerung 10 weiter. Von der Ablaufsteuerung 10 wird daraufhin zum Zeitpunkt T0 (FIG 2) das erste Kommandosignal A einer sequentiellen Folge von insgesamt maximal 4 Kommandosignalen ausgelöst. Mit diesem Signal werden die Löschung des Istwertspeichers 8, das Übernehmen des Parameters "Drehzahlsollwert" n in den Sollwertspeicher 13 sowie die Aktivierung der Kontrolleinrichtung 12 bewirkt.

Die Kontrolleinrichtung 12 berechnet aus den übergebenen Parametern unter Verwendung achsspezifischer Konstanten den für diesen Testbetrieb erforderlichen Verfahrweg und vergleicht diesen Wert mit dem real verfügbaren Verfahrweg der aus der momentanen Istposition und den bekannten Weggrenzwerten resultiert. Bewegt sich der benötigte Weg innerhalb des verfügbaren Weges Smin, Smax, so wird durch Übergabe des Parameters "Zeitdauer" t an die Ablaufsteuerung 10 zum Zeitpunkt T1 (FIG 2) die Fortschaltung zum zweiten Kommandosignal B bewirkt, andernfalls wird diese Fortschaltung verhindert. In einer speziellen Ausgestaltungsvariante kann diese Fortschaltung durch Quittungsbetrieb über die bestehende Dialogschnittstelle 71 erfolgen.

Bei Auslösung des Kommandosignals B wird über das ODER-Glied 11 durch Ansteuerung des Schalterblockes 32 der Lageregelkreis 3 geöffnet und der Drehzahlregelkreis 33 an den Sollwertspeicher 13 und an den Istwertspeicher 8 geschaltet. Der im Sollwertspeicher 13 vorliegende Geschwindigkeits-Sollwert $V_{s1}$ (FIG 2) wird daraufhin dem Drehzahlregler 33 zugeführt. Die bei der nun folgenden Antriebsbewegung vom Weggeber 34 abgegebenen Istwerte werden im Istwertspeicher 8 bezüglich ihres summativen Betrages und im aktivierten Analyser 4 bezüglich ihres zeitlichen Verlaufes eingespeichert.

Nach Ablauf der vorgegebenen Zeitdauer wird zum Zeitpunkt T2 (FIG 2) das Kommandosignal C erzeugt, mit welchem der Sollwertspeicher 13 gelöscht wird, um die Antriebsbewegung zu beenden. Über das ODER-Glied 11 wird der Schaltzustand der übrigen Anordnung wie während des Kommandosignals C beibehalten. Nach Ablauf einer bestimmten Zeit bzw. aufgrund anderer Kriterien, z.B. wenn ein Bewegungsstillstand erreicht ist, wird zum Zeitpunkt T3 (FIG 2) das Kommandosignal C und damit durch Rückschaltung des Schalterblockes 32 der Analysebetrieb beendet und die Lageregelung wieder aufgenommen. Die im Analyser 4 gespeicherten Weg-Zeit-Informationen werden durch eine Anzeigesteuereinheit 6 aufbereitet und einem Bildschirm 7 oder einer anderen Anzeigeeinheit als Weg- (S), Geschwindigkeits ($S'$ = ds/dt) und/oder Beschleunigungsverlauf ($S''$ = $ds^2/dt^2$) zugeführt und stehen damit einer Auswertung bezüglich des Verhaltens der Regelstrecke zur Verfügung.

Im Istwertspeicher 8 ist der zwischen den Zeitpunkten T1 und T3 (FIG 2) zurückgelegte Weg des Antriebs gespeichert. Mit dem zu T3 ausgelösten Kommandosignal C wird dieser Betrag dem Sollwertgenerator 9 zugeführt, der daraus Steuerdaten zur lagegeregelten Rückpositionierung des Antriebs auf die zum Zeitpunkt T1 vorliegende Position berechnet und der Sollwertsteuerung 2 zur Ausführung übergibt ($V_{s2}$ in FIG 4). Die schraffierten Flächen in den Figuren 3 und 4 verdeutlichen, daß der im drehzahlgeregelten Betrieb mit der Geschwindigkeit $v_i$ (FIG 3) verfahrene Weg S1 durch den Sollwertgenerator 9 in wegbetragsgleiche Steuerdaten zur Rückpositionierung um den Weg S2 mit der Geschwindigkeit $V_{S2}$ (FIG 4) umgesetzt wird.

In einer speziellen Ausgestaltungsvariante entfällt die Bildung des Kommandosignals D. Damit entfallen auch der Istwertspeicher 8 und der Sollwertgenerator 9 einschließlich deren Verbindungsleitung. Der Antrieb verbleibt auf seiner zu T3 (FIG 2) erreichten Position in Lageregelung.

Eine weitere, in FIG 1 von der Ablaufsteuerung 10 zur Steuereinheit 1 durch eine gestrichelte Linie angedeutete Ausgestaltungsvariante sieht vor, das Kommandosignal D der Steuereinheit 1 zuzuführen, womit (ggf. unter Beachtung weiterer Randbedingungen wie z.B. einem Koinzidenzsignal aus dem Lageregler) ein automatischer Start einer erneuten Testbewegung auslösbar ist.

**Patentansprüche**

1. Verfahren zur Analyse von Regelstrecken (33) in numerischen Regelsystemen, wobei
   1.1 die Regelstrecke für einen vorgebbaren Analysebetriebsfall von einem betriebsgemäßen Regler (31) abgetrennt wird,
   1.2 die Regelstrecke mit vorgebbaren Testsignalen beaufschlagt wird,
   1.3 die Istwerte eines Antriebssystems der von den Testsignalen ausgelösten Zustandsgrößen (S,S',S'') der Regelstrecke angezeigt werden,
   1.4 und wobei der Analysebetrieb durch eine Ablaufsteuerung (10) koordiniert wird.

2. Verfahren nach Anspruch 1, wobei die im ungeregelten Analysebetrieb erreichte und im Normalbetrieb vom Regler als Regelgröße verarbeitete Zustandsgröße (S) der Regelstrecke (33) auf den zu Beginn des Analysebetriebs vorliegenden Wert gebracht wird.

3. Verfahren nach Anspruch 1 oder 2, wobei Testsignale in zyklischer Folge automatisch vorgegeben werden.

4. Verfahren nach einem der vorstehenden Ansprüche, wobei eine Überwachung der im Testbetrieb veränderten und im Normalbetrieb als Regelgröße verarbeiteten Zustandsgröße (S) der Regelstrecke (33) nach vorgegebenen Grenzwerten erfolgt.

5. Einrichtung zur Analyse von Regelstrecken (33) in numerischen Regelsystemen, wobei

5.1 Mittel zur Abtrennung der Regelstrecke (33) von einem betriebsgemäßen Regler (31),

5.2 Mittel zur Generierung und Aufschaltung von Testsignalen auf die Regelstrecke (33),

5.3 Mittel zur Anzeige (6,7) der durch die Testsignale ausgelösten Istwerte der Zustandsgrößen (S,S',S'') der Regelstrecke (33),

5.4 sowie Mittel zur Ablaufkoordinierung (10) des Analysebetriebs

vorgesehen sind.

6. Einrichtung nach Anspruch 5, wobei die im ungeregelten Analysebetrieb erreichte und im Normalbetrieb vom Regler (31) als Regelgröße verarbeitete Zustandsgröße (S) der Regelstrecke (33) einer Einrichtung zur Rücküberführung auf den bei Beginn des Testbetriebs vorliegenden Wert zugeführt wird.

7. Einrichtung nach Anspruch 5 oder 6, wobei die Testsignale in einer zyklischen Folge automatisch vorgegeben werden.

8. Einrichtung nach einem der vorstehenden Ansprüche, wobei eine Überwachung der im Analysebetrieb veränderten, im Normalbetrieb vom Regler (31) als Regelgröße verarbeiteten Zustandsgröße (S) der Regelstrecke (33) nach vorgegebenen Grenzwerten erfolgt.

9. Einrichtung nach einem der vorstehenden Ansprüche, wobei die Mittel Bestandteile der numerischen Steuerung und wobei die Regelstrecke ein Antriebssystem einer Werkzeugmaschine, eines Roboters oder dgl. ist.

10. Einrichtung nach Anspruch 8 oder 9, wobei die Regelstrecke (33) unterlagerte Regelkreise aufweist.

11. Einrichtung nach Anspruch 10, wobei im Analysebetrieb die Geschwindigkeit (S) als differenzierte Größe der vom Lageregler als Regelgröße verarbeiteten Zustandsgröße "Weg" der Regelstrecke analysiert wird.

12. Einrichtung nach einem der vorstehenden Ansprüche, **dadurch gekennzeichnet,** daß die erforderlichen Testparameter im Dialogverfahren vorgebbar sind.

Dialogdaten

NC-Daten

S,S',S"

Dialogdaten

FIG 1

Smin
Smax

n,t

$S_D$  D

$S_C$  C

$S_B$  B

$S_A$  A

D1

D2

S

FIG 1

FIG 2

FIG 3

FIG 4

Europäisches
Patentamt

**EUROPÄISCHER RECHERCHENBERICHT**

Nummer der Anmeldung

EP    93 10 4886
Seite 1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| Y | EP-A-0 100 391 (R.BOSCH) <br> * Seite 4, Zeile 23 - Seite 7, Zeile 27 * <br> --- | 1,9 | G05B23/02 <br> G05B19/405 |
| Y | PATENT ABSTRACTS OF JAPAN <br> vol. 15, no. 483 (P-1285)(5011) 6. Dezember 1991 <br> & JP-A-32 09 129 ( TOSHIBA ) 12. September 1991 <br> * Zusammenfassung * <br> --- | 1,9 | |
| A | DE-A-3 427 490 (PHILIPS) <br> * Seite 25, Zeile 10 - Seite 31, Zeile 26 * <br> * Seite 18, Zeile 5 - Zeile 31 * <br> --- | 1,5 | |
| A | DE-A-3 726 018 (SIEMENS) <br> * Seite 4, Zeile 19 - Zeile 31 * <br> --- | 1,5 | |
| A | EP-A-0 370 906 (AEROSPATIALE) <br> * Seite 2, Zeile 33 - Zeile 37 * <br> --- | 3,7 | |
| A | PATENT ABSTRACTS OF JAPAN <br> vol. 8, no. 14 (P-249)(1451) 21. Januar 1984 <br> & JP-A-58 175 002 ( MITSUBISHI ) 14. Oktober 1983 <br> * Zusammenfassung * <br> --- | 1,5 | **RECHERCHIERTE SACHGEBIETE (Int. Cl.5 )** <br><br> G05B |
| A | PATENT ABSTRACTS OF JAPAN <br> vol. 9, no. 259 (P-397)(1982) 17. Oktober 1985 <br> & JP-A-60 108 904 ( FUJIKOSHI ) 14. Juni 1985 <br> * Zusammenfassung * <br> --- <br><br> -/-- | 4,8 | |

Der vorliegende Recherchenbericht wurde für alle Patentansprüche erstellt

| Recherchenort | Abschlußdatum der Recherche | Prüfer |
|---|---|---|
| DEN HAAG | 23 JULI 1993 | KELPERIS K. |

Europäisches
Patentamt

**EUROPÄISCHER RECHERCHENBERICHT**

Nummer der Anmeldung

EP 93 10 4886
Seite 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | PATENT ABSTRACTS OF JAPAN<br>vol. 10, no. 173 (P-469)(2229) 18. Juni 1986<br>& JP-A-61 23 216 ( KOBE SEIKOSHO ) 31. Januar 1986<br>* Zusammenfassung *<br>--- | 1,5 | |
| A | DE-A-2 841 220 (R.BOSCH)<br>* Seite 6, Zeile 24 - Seite 8, Zeile 8 *<br>----- | 1,5 | |
| | | | **RECHERCHIERTE SACHGEBIETE (Int. Cl.5)** |

Der vorliegende Recherchenbericht wurde für alle Patentansprüche erstellt

| Recherchenort | Abschlußdatum der Recherche | Prüfer |
|---|---|---|
| DEN HAAG | 23 JULI 1993 | KELPERIS K. |